# EUROPÄISCHE PATENTSCHRIFT

(11) **EP 4 368 559 B1**
(45) Veröffentlichungstag und Bekanntmachung des Hinweises auf die Patenterteilung: **17.12.2025**
(21) Anmeldenummer: 23199958.2
(22) Anmeldetag: 27.09.2023
(51) Int. Cl.: B66C 13/28

(54) **ARBEITSMASCHINE**
A WORKING MACHINE
MACHINE DE TRAVAIL

(30) Priorität: 10.11.2022 DE 202022106309 U
(43) Veröffentlichungstag der Anmeldung: 15.05.2024
(73) Patentinhaber: Liebherr-Werk Nenzing GmbH, 6710 Nenzing (AT)
(72) Erfinder: WEBER, Fabian, 88239 Wangen (DE)
(74) Vertreter: Lorenz Seidler Gossel Part. mbB

(56) Entgegenhaltungen:
- CA-A1- 2 655 334
- CN-U- 205 945 044
- DE-A1- 102004 010 988
- DE-A1- 102010 063 911
- DE-A1- 102018 127 124
- DE-A1- 102019 133 048

## Beschreibung

Die vorliegende Erfindung betrifft eine Arbeitsmaschine wie einen Kran oder einen Bagger, bspw. Seilbagger, der mit einer Vorrichtung zum Notabsenken versehen ist.

Für eine Vielzahl von Arbeitsmaschinen oder Fahrzeugen ist es elementar, in bestimmten Situationen in einen sicheren Zustand zurückzukehren. Bspw. ist es bei einem Kran oder einem Bagger von großer Bedeutung eine gehobene Last bei einer drohenden Instabilität der Arbeitsmaschine oder einer anderen für umstehende Personen gefährlichen Situation sicher auf den Boden abzulassen. Für eine solche Notabsenkung ist es nach dem Stand der Technik üblich, eine Backup-Energieversorgung oder einen ausreichend dimensionierten Akku im DC-Bordnetz (auch genannt Zwischenkreis) vorzusehen, um eine Notabsenkung durchzuführen.

Verfügt eine vollelektrische Arbeitsmaschine über einen im DC-Zwischenkreis angeordneten Energiespeicher bspw. einen Akku, so wird die darin gespeicherte Energie dazu verwendet, die beim Durchführen der Notabsenkung erforderliche Energie bereitzustellen bzw. die dabei anfallende Energie aufzunehmen.

Problematisch wird es dann, wenn der im DC-Zwischenkreis angeordnete Energiespeicher einen Defekt hat und nicht mehr dazu in der Lage ist, Energie für die Notabsenkung abzugeben bzw. aufzunehmen. In einem solchen Fall wird zur Wahrung der Sicherheit die Beschädigung struktureller Bauteile in Kauf genommen, sodass bspw. die beim Absenken einer Last im Zuge einer Notabsenkung entstandene elektrische Energie, die bei einem intakten Energiespeicher durch diese aufgenommen worden wäre, ohne Rücksicht auf Verluste in den DC-Zwischenkreis eingeführt wird, obwohl man weiß, dass dies eine Überspannungsschädigung verursacht, die typischerweise zur vollständigen Zerstörung der mit dem DC-Zwischenkreis angebundenen Komponenten führt. Zum Erreichen eines sicheren Zustands der Arbeitsmaschine im Zuge einer Notabsenkung wird also die Beschädigung der Arbeitsmaschine wissentlich in Kauf genommen. Um einer solchen Beschädigung vorzugreifen werden im Stand der Technik teilweise auch Bremswiderstände oder Bremschopper vorgesehen, die eine durch eine Notabsenkung erzeugte elektrische Energie in thermische Energie wandeln und so Beschädigungen vermeiden.

Zusätzlich oder alternativ dazu kann auch eine Haltebremse, deren Funktion es ist ein Gewerk der Arbeitsmaschine festzulegen oder zu fixieren für einen Abbremsvorgang verwendet werden, obwohl dies auch zwangsläufig dazu führt, dass die nur für das Sichern oder Freigeben einer Position des Gewerks ausgeführte Haltebremse dabei schwer beschädigt wird. Auch die mit der Haltebremse bei einem Abbremsen interagierenden Komponenten der Arbeitsmaschine erfahren dabei eine wesentliche Beschädigung. All dies wird aber in Kauf genommen, um eine Notabsenkung durchzuführen, sodass ein sicherer Zustand der Arbeitsmaschine erlangt wird.

Die DE 10 2010 063 911 A1 zeigt eine Arbeitsmaschine, die die Merkmale aus dem Oberbegriff des Anspruchs 1 aufweist.

Wie oben dargestellt ist es also nachteilhaft, wenn eine Notabsenkung eines Gewerks einer Arbeitsmaschine durchgeführt werden soll und gleichzeitig der am DC-Zwischenkreis angeordnete Energiespeicher während der Durchführung der Notabsenkung nicht zur Verfügung steht. Nach dem Stand der Technik müssen hierfür entweder zusätzliche Bauteile, nämlich Bremswiderstände oder Bremschopper vorgesehen oder mit einer Beschädigung der Haltebremse gerechnet werden.

Es ist das Ziel der vorliegenden Erfindung eine Notabsenkung eines Gewerks einer Arbeitsmaschine ohne die oben aufgeführten Nachteile durchführen zu können, auch dann, wenn der am DC-Zwischenkreis angeordnete Energiespeicher hierfür nicht zur Verfügung steht.

Die vorliegenden Ziele werden dabei mit einer Vorrichtung erreicht, die sämtliche Merkmale des Anspruchs 1 aufweist. Vorteilhafte Ausgestaltungen der Vorrichtung sind dabei in den abhängigen Ansprüchen aufgeführt.

Eine erfindungsgemäße Arbeitsmaschine, insbesondere Kran oder Bagger, umfasst eine Primärenergiequelle zum Einspeisen von elektrischer Energie in einen Zwischenkreis, ein Gewerk zum Ausführen einer Tätigkeit der Arbeitsmaschine, mindestens einen am Zwischenkreis angeschlossenen elektrischen Antrieb, um das Gewerk der Arbeitsmaschine zu betreiben, eine Haltebremse zum Festsetzen oder Freigeben des Gewerks, und einen Energiespeicher, der mit dem Zwischenkreis verbunden ist, um bei einer Betätigung eines Gewerks aus dem Zwischenkreis angeforderte elektrische Energie bereitzustellen und/oder in den Zwischenkreis eingespeiste elektrische Energie aufzunehmen, wobei bei einem Notabsenken des Gewerks der mindestens eine elektrische Antrieb dazu ausgelegt ist, die dabei anfallende kinetische Energie in elektrische Energie umzuwandeln und in den Zwischenkreis einzuspeisen. Die Erfindung ist dadurch gekennzeichnet, dass bei einem gleichzeitigen zum Notabsenken auftretenden Ausfall des Energiespeichers die Primärenergiequelle dazu ausgelegt ist, die vom elektrischen Antrieb in den Zwischenkreis eingespeiste Energie aufzunehmen.

Die Arbeitsmaschine verfügt über mindestens ein elektrisches Antriebssystem (und kann darüber hinaus auch Verbraucher aufweisen), welches aus einem gemeinsamen Zwischenkreis, vorzugsweise DC-Zwischenkreis versorgt wird. Zu dem mindestens einen elektrischen Antriebssystem gehört bspw. ein Hubwerksantrieb. Jeder Hubwerksantrieb verfügt über eine Haltebremse, welche elektrisch oder elektro-hydraulisch betätigt wird. Zum Öffnen der Haltebremse muss diese mit Energie versorgt werden. Am DC-Zwischenkreis befindet sich ein Energiespeicher, der auch Zyklenspeicher genannt wird und bspw. in Form einer Batterie umgesetzt ist. Dieser Energiespeicher kappt die von den elektrischen Antrieben und anderen Verbrauchern verursachten Lastspitzen und ist dazu in der Lage Rückleistung aufzunehmen.

Die Energie für den Arbeitsprozess der Arbeitsmaschine stammt aus der Primärenergiequelle, welche z. B. ein oder mehrere Ladegeräte oder ein Diesel-Genset mit HVDC-Anschluss (ein Hochvolt-Gleichstromanschluss) sein kann. Im Normalbetrieb ist der Leistungsfluss von der Primärenergiequelle über den Energiespeicher zeitlich verzögert zum Antriebssystem und den eventuellen Verbrauchern.

Werden bei einer Notabsenkung Lasten mithilfe von Elektromotoren und Invertern über Hubwerke abgesenkt, so müssen diese mit elektrischer Leistung versorgt werden, um funktionsfähig zu sein. Außerdem benötigt die Haltebremse elektrische Energie, um geöffnet zu werden. In beiden Fällen wird die elektrische Leistung von der Primärenergiequelle geliefert. Um die Last an einem Gewerk abzusenken, muss die Haltebremse geöffnet werden. Im Anschluss daran wird die Last gesenkt. Durch das Senken wird Leistung in den DC-Zwischenkreis zurückgespeist. Ohne einen intakten Energiespeicher steigt die Spannung im DC-Zwischenkreis bis zur Zerstörung der am DC-Zwischenkreis gekoppelten Komponenten an. Nach der Erfindung ist es daher vorteilhaft, die Primärenergiequelle als Leistungssenke zu nutzen, um eine Beschädigung von an dem DC-Zwischenkreis gekoppelten Komponenten zu verhindern.

Der Unterschied zum Stand der Technik besteht darüber hinaus darin, dass auf zusätzliche Komponenten zur Absenkung der Last verzichtet wird. Nach einem Beheben des Fehlers am Energiespeicher kann die Arbeitsmaschine, ohne weiteren Service, weiterarbeiten.

Nach einer vorteilhaften Modifikation der vorliegenden Erfindung kann vorgesehen sein, dass der elektrische Antrieb einen mit dem Zwischenkreis verbundenen Inverter und einen Elektromotor umfasst, vorzugsweise wobei eine Welle des Elektromotors mit einem zugehörigen Gewerk gekoppelt, insbesondere starr gekoppelt ist.

So führt dies dazu, dass bei einem Absenken einer Last durch das Gewerk der Elektromotor generatorisch betrieben wird, sodass der Inverter die dabei entstehende Energie in den Zwischenkreis überträgt. Wird der Elektromotor hingegen motorisch betrieben, bspw. beim Heben einer Last, ist es erforderlich, dass der Inverter die hierfür benötigte Energie aus dem Zwischenkreis entnimmt und dem Elektromotor zur Verfügung stellt.

Vorteilhafterweise kann hier weiter vorgesehen sein, dass der mit dem Zwischenkreis verbundene Inverter dazu ausgelegt ist, einen Gleichstrom im Zwischenkreis in einen Wechselstrom umzuwandeln, um den Elektromotor mit Wechselstrom zu versorgen und/oder einen durch den Elektromotor erzeugten Wechselstrom in Gleichstrom umzuwandeln und in den Zwischenkreis einzuspeisen.

Insbesondere kann vorgesehen sein, dass der Inverter ein DC-AC-Inverter ist, der dazu in der Lage ist, Gleichstrom in Wechselstrom und umgekehrt umzuwandeln. Zum Betreiben eines Elektromotors wird Wechselstrom benötigt, wohingegen der Zwischenkreis oftmals mit Gleichstrom betrieben wird, da die hierbei entstehenden Verluste deutlich geringer sind.

Nach einer optionalen Modifikation der vorliegenden Erfindung kann weiter vorgesehen sein, dass bei einem gleichzeitig zum Notabsenken auftretenden Ausfall des Energiespeichers die Primärenergiequelle dazu ausgelegt ist, den Zwischenkreis mit einer Energie zu versorgen, um den Inverter des mindestens einen elektrischen Antriebs mit einer Versorgungsspannung zu versehen.

Dies ist von Vorteil, da zum Betreiben des mindestens einen elektrischen Antriebs am DC-Eingang des zugehörigen Inverters eine minimale Spannung anliegen muss.

In Ermangelung eines funktionsfähigen Energiespeichers wird die hierfür erforderliche Energie unmittelbar von der Primärenergiequelle bereitgestellt

Nach einer vorteilhaften Fortbildung der vorliegenden Erfindung kann vorgesehen sein, dass bei einem gleichzeitigen zum Notabsenken auftretenden Ausfall des Energiespeichers die Primärenergiequelle dazu ausgelegt ist, den Zwischenkreis mit einer Energie zu versorgen, so dass die aus dem Zwischenkreis mit Energie versorgte Haltebremse dazu in der Lage ist, das Gewerk freizugeben. Um ein durch die Haltebremse fixiertes Gewerk in eine sichere Position im Rahmen einer Notabsenkung zu überführen, ist zunächst einmal eine bestimmte Energie erforderlich, mit der die Haltebremse in einen geöffneten Zustand zum Freigeben des Gewerks zu überführt werden kann. Ist der Energiespeicher, auf dem die normalerweise hierfür erforderliche Energie abgerufen wird, defekt, springt auch in diesem Fall die Primärenergiequelle ein und versorgt die Haltebremse mit ausreichend Energie zum Freigeben des Gewerks.

Nach der vorliegenden Erfindung ist vorgesehen, dass bei einem gleichzeitigen zum Notabsenken auftretenden Ausfall des Energiespeichers die Primärenergiequelle dazu ausgelegt ist, von dem mindestens einen Gewerk über den elektrischen Antrieb in den Zwischenkreis eingespeiste Energie, die bei einem Absenken in einen sicheren Zustand entstanden ist, aufzunehmen.

Da der Energiespeicher auch nicht mehr dazu in der Lage ist, die bei einem Absenken des Gewerks entstandene Energie aufzunehmen, wird die Primärenergiequelle als Leistungssenke verwendet, um eine Beschädigung der mit dem DC-Zwischenkreis gekoppelten Komponenten zu verhindern. Würde hingegen die Primärenergiequelle die von dem elektrischen Antrieb in den DC-Zwischenkreis eingespeiste Energie beim Absenken des Gewerks nicht aufnehmen, würde die nicht abgebaute Energie zu einer Beschädigung der mit dem DC-Zwischenkreis gekoppelten Komponenten führen.

Nach einer weiteren vorteilhaften Ausgestaltung der vorliegenden Erfindung kann die Primärenergiequelle mindestens ein Ladegerät und/oder ein kraftstoffbetriebenes Generatorset, bspw. betrieben mit Diesel, Wasserstoff oder dergleichen sein. Das Ladegerät wie auch das Generatorset verfügt dabei über ausreichend Kapazität, um im Falle einer Notabsenkung die dabei anfallende Energie aufzunehmen bzw. die zur Notabsenkung erforderliche Energie bereitzustellen.

Nach der vorliegenden Erfindungist vorgesehen, dass bei einem gleichzeitigen zum Notabsenken auftretenden Ausfall des Energiespeichers der elektrische Antrieb dazu ausgelegt ist, eine durch ein Absenken eines Gewerks hervorgerufene Drehzahl im Elektromotor zu begrenzen, um eine maximale Leistungsaufnahme der Primärenergiequelle nicht zu überschreiten.

Da die Primärenergiequelle natürlich nicht in erster Linie dazu ausgelegt ist die beim Absenken eines Gewerks anfallende Energie aufzunehmen, kann deren Leistungsaufnahme beschränkt sein. Um diesem Umstand Rechnung zu tragen kann nach der Erfindung vorgesehen sein, dass im Falle einer Notabsenkung bei einem gleichzeitig defekten Energiespeicher das Absenken eines Gewerks deutlich langsamer vonstattengeht, um die maximale Leistungsaufnahme der Primärenergiequelle nicht zu überschreiten. Da die in den DC-Zwischenkreis eingespeiste Leistung direkt proportional zur Geschwindigkeit eines Absenkvorgangs ist, bewirkt die Verringerung der Absenkgeschwindigkeit auch eine Verringerung der maximalen Leistungsaufnahme.

Nach einer weiteren optionalen Fortbildung der vorliegenden Erfindung kann vorgesehen sein, dass bei einem gleichzeitigen zum Notabsenken auftretenden Ausfall des Energiespeichers die Primärenergiequelle dazu ausgelegt ist, den Zwischenkreis mit einer Energie zu versorgen, so dass die aus dem Zwischenkreis mit Energie versorgte Haltebremse dazu in der Lage ist, das Gewerk festzusetzen, um das Gewerk in einer sicheren Position zu sichern.

Wurde der Absenkvorgang erfolgreich durchgeführt, ist es noch erforderlich, das abgesenkte Gewerk an der erreichten abgesenkten Position festzusetzen. Hierfür wird die Haltebremse verwendet, deren Energie für die Betätigung durch die Primärenergiequelle bereitgestellt wird. Auch hier kann der defekte Energiespeicher die zum Festsetzen erforderliche Energie nicht liefern, sodass erneut auf die Primärenergiequelle zurückgegriffen wird.

Weiter kann nach der vorliegenden Erfindung vorgesehen sein, dass bei einem gleichzeitigen zum Notabsenken auftretenden Ausfall des Energiespeichers die Primärenergiequelle dazu ausgelegt ist, nach einem Absenken des mindestens einen Gewerks in eine sichere Position die im Zwischenkreis verbleibende Spannung abzusenken, indem die Primärenergiequelle als Energiesenke arbeitet.

Zu guter Letzt ist es erforderlich, das Spannungsniveau im DC-Zwischenkreis soweit abzusenken, dass davon keine Gefahr mehr ausgeht. Um diesen Zustand zu erreichen wird die im DC-Zwischenkreis verbliebene Spannung an die Primärenergiequelle abgegeben, die als Energiesenke arbeitet.

Nach der Erfindung kann ferner vorgesehen sein, dass das mindestens eine Gewerk ein Hubwerk oder ein Drehwerk einer Arbeitsmaschine ist.

Zudem kann nach der Erfindung vorgesehen sein, dass die Arbeitsmaschine eine vollelektrische Arbeitsmaschine ist, bei der vorzugsweise jedes Gewerk über einen elektrischen Antrieb betätigt wird.

Des Weiteren ist ein Verfahren zum Steuern einer Arbeitsmaschine nach einer der vorstehend aufgeführten Varianten dargestellt.

Nach dem Verfahren kann vorgesehen sein, dass im Falle eines defekten Energiespeichers und der Anforderung nach einem Notabsenken die für das Notabsenken erforderliche Energie von der Primärenergiequelle bereitgestellt wird.

So kann vorteilhafter Weise vorgesehen sein, dass zum Betreiben eines Inverters die dafür erforderliche Versorgungsspannung von der Primärenergiequelle zur Verfügung gestellt wird. Nur so kann gewährleistet werden, dass die Wandlung über den Inverter weiterhin vonstattengehen kann.

Weiter kann vorgesehen sein, dass die Primärenergiequelle die Energie zur Verfügung stellt, um eine Haltebremse zu öffnen, wenn im Falle einer Notabsenkung der Energiespeicher ausgefallen ist.

Zudem kann vorgesehen sein, dass die Primärenergiequelle in diesem Fall auch als Energiesenke wirkt, um bei einem Absenken eines Gewerks die dabei in den DC-Zwischenkreis eingespeiste Energie aufzunehmen. Vorteilhafterweise kann dabei vorgesehen sein, dass bei einem Absenken des Gewerks die Drehzahl verringert wird, um die maximale Leistungsaufnahme der Primärenergiequelle nicht zu überschreiten.

Befindet sich das Gewerk dann in einer sicheren Position, so wird die Haltebremse geschlossen, wobei nach einer Fortbildung des Verfahrens vorgesehen sein kann, dass die Energie zum Schließen der Haltebremse aus der Primärenergiequelle stammt.

Abschließend kann im Falle einer Notabsenkung bei einem defekten Energiespeicher weiter vorgesehen sein, dass zum Absenken der Zwischenkreisspannung die Primärenergiequelle als Energiesenke verwendet wird.

Weitere Merkmale, Einzelheiten und Vorteile werden anhand der nachfolgenden Figurenbeschreibung ersichtlich. Dabei zeigen:
- Fig. 1:: einen schematischen Grundaufbau der erfindungsgemäßen Arbeitsmaschine, und
- Fig. 2:: ein Ablaufdiagramm zum Darstellen der unterschiedlichen Schritte einer Steuereinheit der Arbeitsmaschine bzw. eines zur Steuerung der Arbeitsmaschine verwendeten Verfahrens.

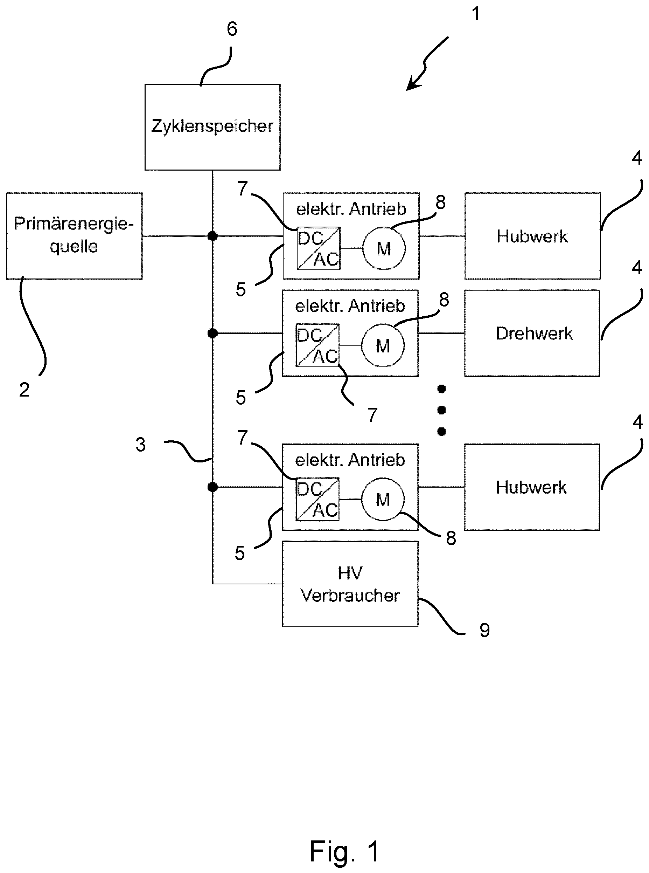

Fig. 1 zeigt einen schematischen Grundaufbau einer erfindungsgemäßen Arbeitsmaschine 1.

Dargestellt ist eine vollelektrische Arbeitsmaschine 1, bei der die Gewerke 4, welche die Arbeit der Maschine 1 verrichten, durch elektrische Antriebe 5 ausgeführt sind. Die Arbeitsmaschine 1 umfasst dabei mehrere elektrische Antriebe 5, welche jeweils einen Inverter 7 und einen Elektromotor 8 aufweisen. Die elektrischen Antriebe 5 sind mechanisch, über die Welle des Elektromotors 8, mit dem jeweiligen zugehörigen Gewerk 4 gekoppelt. Jedes der Gewerke 4 verfügt dabei über eine Haltebremse (nicht in Fig. 1 dargestellt), die eine mit dem Gewerk 4 gehobene oder betätigte Last hält. Die jeweiligen Inverter 7 der elektrischen Antriebe 5 sind elektrisch mit dem Zwischenkreis 3, vorzugsweise dem DC-Zwischenkreis verbunden

Optional befinden sich dabei am DC-Zwischenkreis 3 weitere Hochvolt-Verbraucher 9, wie zum Beispiel Hochvolt-Heizer, DC/DC-Wandler, Kompressoren oder dergleichen.

Die Arbeitsmaschine 1 umfasst darüber hinaus einen Energiespeicher 6, der auch als Zyklenspeicher bezeichnet werden kann, der ebenfalls an dem DC-Zwischenkreis 3 angeschlossen ist. Der Energiespeicher 6 ist sowohl eine Quelle als auch eine Senke für elektrische Energie während des Arbeitsprozesses der Arbeitsmaschine 1. Darüber hinaus besitzt die Arbeitsmaschine 1 auch eine Primärenergiequelle 2, bei der es sich bspw. um ein Generatorset (auch: Genset) oder ein Ladegerät handelt. Die Primärenergiequelle 2 versorgt die Arbeitsmaschine 1 mit elektrischer Energie.

Die elektrischen Antriebe 5 sind dabei so ausgelegt, dass sie elektrische Energie bei einem Bremsvorgang zurückspeisen. Dies ist bspw. beim Absenken einer Last an einem als Hubwerk ausgestalteten Gewerk 4 der Fall, bei dem die kinetische Energie eines Absenkens über einen generatorischen Betrieb des Elektromotors 8 in elektrische Energie gewandelt wird. Der mit dem Elektromotor 8 in Verbindung stehende Inverter 7 sorgt dann dafür, dass die rekuperierte elektrische Energie in den DC-Zwischenkreis 3 eingespeist wird. Die dabei in den DC-Zwischenkreis 3 zurückgespeiste elektrische Energie wird im Normalbetrieb von dem Energiespeicher 6 aufgenommen, die hierbei als Energiesenke arbeitet. Dadurch wird sichergestellt, dass der DC-Zwischenkreis 3 nicht mit zu viel Energie belastet wird, was die an dem DC-Zwischenkreis 3 gekoppelten Bauteile beschädigen könnte. Darüber hinaus ist festzuhalten, dass es für das Betreiben der elektrischen Antriebe 5 erforderlich ist, an dem DC-Eingang eines jeweiligen Inverters 7 eine minimale Spannung anzulegen, um das Wandeln der Energie von Gleichstrom in Wechselstrom und umgekehrt durchführen zu können.

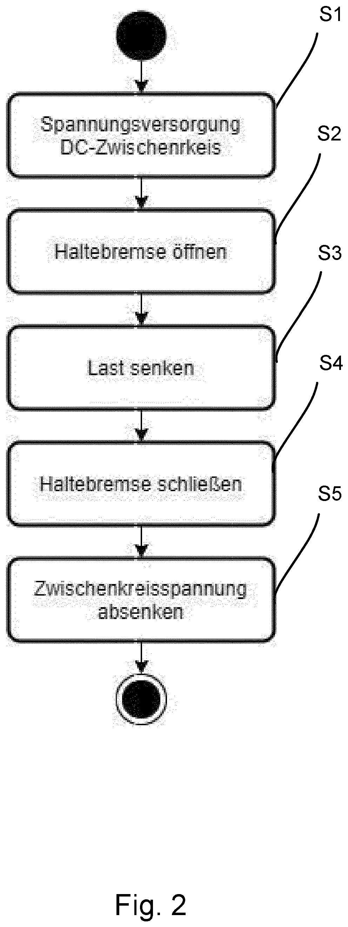

Fig. 2 zeigt nun eine Abfolge von Schritten S 1 bis S 5, die durch eine Steuereinheit einer Arbeitsmaschine 1 bzw. ein Verfahren der vorliegenden Erfindung durchgeführt werden, wenn eine Notabsenkung eines Gewerks 4 erforderlich ist und zugleich der Energiespeicher 6 ausfällt.

Bei einem Ausfall des Energiespeichers 6 fehlt die bei einer Notabsenkung typischerweise verwendete Senke für die elektrische Energie. Darüber hinaus kann der Energiespeicher 6 auch nicht mehr die an einen jeweiligen Inverter 7 anzulegende minimale Spannung zur Verfügung stellen. Hieraus folgt, dass keines der Gewerke 4 der Arbeitsmaschine 1 betrieben werden kann, sodass es nicht möglich ist, die Arbeitsmaschine 1 mittels der Notabsenkung in einen sicheren Zustand zu überführen.

Im ersten Schritt des in Fig. 2 gezeigten Diagramms wird sichergestellt, dass im DC-Zwischenkreis 3 eine Spannung anliegt, sodass die Inverter 7 betriebsbereit sind (S 1). Für die Bereitstellung der Spannung am DC-Zwischenkreis 3 wird die Primärenergiequelle 2 als elektrische Energiequelle verwendet.

Im Anschluss daran wird im Schritt S 2 die Haltebremse des Gewerks 4 geöffnet. Für das Öffnen wird elektrische Energie aus dem DC-Zwischenkreis 3 verwendet, welche ebenfalls von der Primärenergiequelle 2 bereitgestellt wird.

Insbesondere bei Gewerken 4 mit vertikalen Lasten, bspw. einem Hubwerk oder dergleichen, dreht sich das Gewerk 4 nach einem Öffnen der Haltebremse aufgrund eines durch die Gewichtskraft bedingten Absinkens der Last (S 3). Dadurch wird Energie in den DC-Zwischenkreis 3 zurückgespeisten, die durch einen generatorischen Betrieb des Elektromotors 8 und über eine entsprechende Wandlung durch den Inverter 7 erfolgt. Die dabei in den DC-Zwischenkreis 3 zurückgespeiste Energie wird von der Primärenergiequelle 2 aufgenommen. Von Vorteil kann es hierbei sein, wenn die Drehzahl des Gewerks 4 so begrenzt wird, dass die maximale Leistungsaufnahme der Primärenergiequelle 2 nicht überschritten wird.

Befindet sich dann im anschließenden Schritt S 4 das Gewerk 4 in einer sicheren Position, so wird die Haltebremse geschlossen. Die hierbei erforderliche Energie zum Schließen der Haltebremse stammt aus der Primärenergiequelle 2, welche nun wieder als Quelle wirkt.

Im letzten Schritt S 5 wird die Zwischenkreisspannung abgesenkt, sodass von dem DC-Zwischenkreis 3 während eines Wartungseingriff oder dergleichen keine Gefahr mehr ausgeht. Hierbei wird die Primärenergiequelle 2 als Energiesenke verwendet.

Im Unterschied zu Umsetzungen aus dem Stand der Technik kann auf zusätzliche Komponenten zur Absenkung der Last verzichtet werden, die bei einer Notabsenkung und gleichzeitig defekten Energiespeicher normalerweise vonnöten wären. So kann bei der Erfindung nach einer Behebung der Fehler am Energiespeicher 6 die Arbeitsmaschine 1 in den regulären Betrieb überführt werden, ohne dass weitere Servicemaßnahmen erforderlich sind.

## Patentansprüche

1. Arbeitsmaschine (1), insbesondere Kran oder Bagger, umfassend:
eine Primärenergiequelle (2) zum Einspeisen von elektrischer Energie in einen Zwischenkreis (3),
ein Gewerk (4) zum Ausführen einer Tätigkeit der Arbeitsmaschine (1),
mindestens einen am Zwischenkreis (3) angeschlossenen elektrischen Antrieb (5), um das Gewerk (4) der Arbeitsmaschine (1) zu betreiben,
eine Haltebremse zum Festsetzen oder Freigeben des Gewerks (4), und
einen Energiespeicher (6), der mit dem Zwischenkreis (3) verbunden ist, um bei einer Betätigung des Gewerks (4) aus dem Zwischenkreis (3) angeforderte elektrische Energie bereitzustellen und/oder in den Zwischenkreis (3) eingespeiste elektrische Energie aufzunehmen,
wobei
bei einem Notabsenken des Gewerks (4), der mindestens eine elektrische Antrieb (5) dazu ausgelegt ist, die dabei anfallende kinetische Energie in elektrische Energie umzuwandeln und in den Zwischenkreis (3) einzuspeisen, **dadurch gekennzeichnet, dass**
bei einem gleichzeitigen zum Notabsenken auftretenden Ausfall des Energiespeichers (6), die Primärenergiequelle (2) dazu ausgelegt ist, die vom elektrischen Antrieb (5) in den Zwischenkreis (3) eingespeiste Energie aufzunehmen,
bei dem gleichzeitigen zum Notabsenken auftretenden Ausfall des Energiespeichers (6), die Primärenergiequelle (2) von dem mindestens einen Gewerk (4) über den elektrischen Antrieb (5) in den Zwischenkreis (3) eingespeiste Energie, die bei einem Absenken in einen sicheren Zustand entstanden ist, aufzunehmen, und
bei dem gleichzeitigen zum Notabsenken auftretenden Ausfall des Energiespeichers (6), der elektrische Antrieb (5) dazu ausgelegt ist, eine durch ein Absenken eines Gewerks (4) hervorgerufene Drehzahl im Elektromotor (8) zu begrenzen, um eine maximale Leistungsaufnahme der Primärenergiequelle (2) nicht zu überschreiten.

2. Arbeitsmaschine (1) nach Anspruch 1, wobei der elektrische Antrieb (5) einen mit dem Zwischenkreis (3) verbundenen Inverter (7) und einen Elektromotor (8) umfasst, vorzugsweise wobei eine Welle des Elektromotors (8) mit einem zugehörigen Gewerk (4) gekoppelt, insbesondere starr gekoppelt ist.

3. Arbeitsmaschine (1) nach Anspruch 2, wobei der mit dem Zwischenkreis (3) verbundene Inverter (7) dazu ausgelegt ist, einen Gleichstrom im Zwischenkreis (3) in einen Wechselstrom umzuwandeln, um den Elektromotor (8) mit Wechselstrom zu versorgen und/oder einen durch den Elektromotor (8) erzeugten Wechselstrom in Gleichstrom umzuwandeln und in den Zwischenkreis (3) einzuspeisen.

4. Arbeitsmaschine (1) nach einem der vorhergehenden Ansprüche 2 oder 3, wobei bei einem gleichzeitigen zum Notabsenken auftretenden Ausfall des Energiespeichers (6) die Primärenergiequelle (2) dazu ausgelegt ist, den Zwischenkreis (3) mit einer Energie zu versorgen, um den Inverter (7) des mindestens einen elektrischen Antriebs (5) mit einer Versorgungsspannung zu versehen.

5. Arbeitsmaschine (1) nach einem der vorhergehenden Ansprüche, wobei bei einem gleichzeitigen zum Notabsenken auftretenden Ausfall des Energiespeichers (6) die Primärenergiequelle (2) dazu ausgelegt ist, den Zwischenkreis (3) mit einer Energie zu versorgen, so dass die aus dem Zwischenkreis (3) mit Energie versorgte Haltebremse dazu in der Lage ist, das Gewerk (4) freizugeben.

6. Arbeitsmaschine (1) nach einem der vorhergehenden Ansprüche, wobei bei einem gleichzeitigen zum Notabsenken auftretenden Ausfall des Energiespeichers (6) die Primärenergiequelle (2) dazu ausgelegt ist, den Zwischenkreis (3) mit einer Energie zu versorgen, so dass die aus dem Zwischenkreis (3) mit Energie versorgte Haltebremse dazu in der Lage ist, das Gewerk (4) festzusetzen, um das Gewerk (4) in einer sicheren Position zu sichern.

7. Arbeitsmaschine (1) nach einem der vorhergehenden Ansprüche, wobei bei einem gleichzeitigen zum Notabsenken auftretenden Ausfall des Energiespeichers (6) die Primärenergiequelle (2) dazu ausgelegt ist, nach einem Absenken des mindestens einen Gewerks (4) in eine sichere Position die im Zwischenkreis (3) verbleibende Spannung abzusenken, indem die Primärenergiequelle (2) als Energiesenke arbeitet.

8. Arbeitsmaschine (1) nach einem der vorhergehenden Ansprüche, wobei das mindestens eine Gewerk (4) ein Hubwerk oder ein Drehwerk ist.

## Claims

1. Work machine (1), in particular a crane or an excavator, comprising:
a primary energy source (2) for injecting electrical energy into an intermediate circuit (3),
a mechanism (4) for performing an activity of the work machine (1),
at least one electric drive (5) connected to the intermediate circuit (3) to operate the mechanism (4) of the work machine (1),
a holding brake for blocking or releasing the mechanism (4), and
an energy store (6) connected to the intermediate circuit (3) to, upon actuation of the mechanism (4), provide the electrical energy demanded from the intermediate circuit (3) and/or to absorb the electrical energy injected into the intermediate circuit (3),
wherein, during an emergency lowering of the mechanism (4), the at least one electric drive (5) is configured to convert the kinetic energy thereby produced into electrical energy and to inject it into the intermediate circuit (3),
**characterized in that**, in the event of a failure of the energy store (6) occurring simultaneously with the emergency lowering, the primary energy source (2) is configured to absorb the energy injected into the intermediate circuit (3) by the electric drive (5),
**in that**, in the event of a failure of the energy store (6) occurring simultaneously with the emergency lowering, the primary energy source (2) is configured to absorb the energy injected into the intermediate circuit (3) by the at least one mechanism (4) via the electric drive (5), which energy was produced during a lowering into a safe state, and
**in that**, in the event of a failure of the energy store (6) occurring simultaneously with the emergency lowering, the electric drive (5) is configured to limit a rotational speed of the electric motor (8) caused by a lowering of a mechanism (4) so as not to exceed a maximum power that can be absorbed by the primary energy source (2).

2. Work machine (1) according to claim 1, wherein the electric drive (5) comprises an inverter (7) connected to the intermediate circuit (3) and an electric motor (8), preferably wherein a shaft of the electric motor (8) is coupled, in particular rigidly coupled, to an associated mechanism (4).

3. Work machine (1) according to claim 2, wherein the inverter (7) connected to the intermediate circuit (3) is configured to convert a direct current in the intermediate circuit (3) into an alternating current in order to supply the electric motor (8) with alternating current and/or to convert an alternating current generated by the electric motor (8) into direct current and inject it into the intermediate circuit (3).

4. Work machine (1) according to either of the preceding claims 2 or 3, wherein, in the event of a failure of the energy store (6) occurring simultaneously with the emergency lowering, the primary energy source (2) is configured to supply the intermediate circuit (3) with energy so as to provide a supply voltage to the inverter (7) of the at least one electric drive (5).

5. Work machine (1) according to any one of the preceding claims, wherein, in the event of a failure of the energy store (6) occurring simultaneously with the emergency lowering, the primary energy source (2) is configured to supply the intermediate circuit (3) with energy such that the holding brake supplied with energy from the intermediate circuit (3) is able to release the mechanism (4).

6. Work machine (1) according to any one of the preceding claims, wherein, in the event of a failure of the energy store (6) occurring simultaneously with the emergency lowering, the primary energy source (2) is configured to supply the intermediate circuit (3) with energy such that the holding brake supplied with energy from the intermediate circuit (3) is able to block the mechanism (4) in order to secure the mechanism (4) in a safe position.

7. Work machine (1) according to any one of the preceding claims, wherein, in the event of a failure of the energy store (6) occurring simultaneously with the emergency lowering, the primary energy source (2) is configured to lower the voltage remaining in the intermediate circuit (3) after a lowering of the at least one mechanism (4) into a safe position, by the primary energy source (2) operating as an energy sink.

8. Work machine (1) according to any one of the preceding claims, wherein the at least one mechanism (4) is a hoisting mechanism or a slewing mechanism.

## Revendications

1. Machine de travail (1), notamment grue ou excavatrice, comprenant :
une source d'énergie primaire (2) pour injecter de l'énergie électrique dans un circuit intermédiaire (3),
un mécanisme (4) pour exécuter une activité de la machine de travail (1),
au moins un entraînement électrique (5) raccordé au circuit intermédiaire (3) pour faire fonctionner le mécanisme (4) de la machine de travail (1),
un frein de maintien pour bloquer ou libérer le mécanisme (4), et
un accumulateur d'énergie (6) relié au circuit intermédiaire (3) pour fournir, lors d'un actionnement du mécanisme (4), l'énergie électrique demandée au circuit intermédiaire (3) et/ou pour absorber l'énergie électrique injectée dans le circuit intermédiaire (3),
où,
lors d'un abaissement d'urgence du mécanisme (4), l'au moins un entraînement électrique (5) est conçu pour convertir l'énergie cinétique ainsi produite en énergie électrique et l'injecter dans le circuit intermédiaire (3), **caractérisé en ce que**
lors d'une défaillance de l'accumulateur d'énergie (6) survenant simultanément à l'abaissement d'urgence, la source d'énergie primaire (2) est conçue pour absorber l'énergie injectée dans le circuit intermédiaire (3) par l'entraînement électrique (5),
lors d'une défaillance de l'accumulateur d'énergie (6) survenant simultanément à l'abaissement d'urgence, la source d'énergie primaire (2) est conçue pour absorber l'énergie injectée dans le circuit intermédiaire (3) par l'au moins un mécanisme (4) via l'entraînement électrique (5), qui a été produite lors d'un abaissement dans un état sûr, et
lors d'une défaillance de l'accumulateur d'énergie (6) survenant simultanément à l'abaissement d'urgence, l'entraînement électrique (5) est conçu pour limiter une vitesse de rotation du moteur électrique (8) provoquée par un abaissement d'un mécanisme (4) afin de ne pas dépasser une absorption de puissance maximale de la source d'énergie primaire (2).

2. Machine de travail (1) selon la revendication 1, où l'entraînement électrique (5) comprend un onduleur (7) relié au circuit intermédiaire (3) et un moteur électrique (8), de préférence où un arbre du moteur électrique (8) est couplé, notamment est couplé de manière rigide, à un mécanisme associé (4).

3. Machine de travail (1) selon la revendication 2, où l'onduleur (7) relié au circuit intermédiaire (3) est conçu pour convertir un courant continu dans le circuit intermédiaire (3) en un courant alternatif afin d'alimenter le moteur électrique (8) en courant alternatif et/ou pour convertir un courant alternatif généré par le moteur électrique (8) en courant continu et l'injecter dans le circuit intermédiaire (3).

4. Machine de travail (1) selon l'une quelconque des revendications 2 ou 3 précédentes, où, lors d'une défaillance de l'accumulateur d'énergie (6) survenant simultanément à l'abaissement d'urgence, la source d'énergie primaire (2) est conçue pour alimenter le circuit intermédiaire (3) en énergie afin de fournir une tension d'alimentation à l'onduleur (7) de l'au moins un entraînement électrique (5).

5. Machine de travail (1) selon l'une quelconque des revendications précédentes, où, lors d'une défaillance de l'accumulateur d'énergie (6) survenant simultanément à l'abaissement d'urgence, la source d'énergie primaire (2) est conçue pour alimenter le circuit intermédiaire (3) en énergie, de telle sorte que le frein de maintien alimenté en énergie à partir du circuit intermédiaire (3) soit en mesure de libérer le mécanisme (4).

6. Machine de travail (1) selon l'une quelconque des revendications précédentes, où, lors d'une défaillance de l'accumulateur d'énergie (6) survenant simultanément à l'abaissement d'urgence, la source d'énergie primaire (2) est conçue pour alimenter le circuit intermédiaire (3) en énergie, de telle sorte que le frein de maintien alimenté en énergie à partir circuit intermédiaire (3) soit en mesure de bloquer le mécanisme (4) afin de sécuriser le mécanisme (4) dans une position sûre.

7. Machine de travail (1) selon l'une quelconque des revendications précédentes, dans laquelle, lors d'une défaillance de l'accumulateur d'énergie (6) survenant simultanément à l'abaissement d'urgence, la source d'énergie primaire (2) est conçue pour abaisser la tension restant dans le circuit intermédiaire (3) après un abaissement de l'au moins un mécanisme (4) dans une position sûre, par le fait que la source d'énergie primaire (2) fonctionne comme dissipateur d'énergie.

8. Machine de travail (1) selon l'une quelconque des revendications précédentes, où l'au moins un mécanisme (4) est un mécanisme de levage ou un mécanisme de rotation.
